Europäisches Patentamt

(19) European Patent Office

Office européen des brevets

(11) Numéro de publication: **0 181 240**
**B1**

(12) **FASCICULE DE BREVET EUROPÉEN**

(45) Date de publication du fascicule du brevet:
**04.01.89**

(21) Numéro de dépôt: **85401910.6**

(22) Date de dépôt: **01.10.85**

(51) Int. Cl.⁴: **H 02 K 7/116,** F 16 D 1/02,
F 16 D 3/20, F 16 D 3/18

(54) Motoréducteur électrique, destiné à l'actionnement d'accessoires de véhicules automobiles, tels que des glaces.

(30) Priorité: **10.10.84 FR 8415564**

(43) Date de publication de la demande:
**14.05.86 Bulletin 86/20**

(45) Mention de la délivrance du brevet:
**04.01.89 Bulletin 89/1**

(84) Etats contractants désignés:
**DE GB IT SE**

(56) Documents cité:
**DE-A-1 513 750**
**DE-C-423 985**
**FR-A-1 157 896**
**FR-A-1 280 224**
**FR-A-2 288 246**
**FR-A-2 491 133**
**US-A-2 058 572**
**US-A-2 984 995**
**US-A-3 269 204**
**US-A-4 098 096**
**US-A-4 227 104**

(73) Titulaire: **Rockwell- CIM, 6, rue Barbès, F-92302
Levallois- Perret (FR)**

(72) Inventeur: **Periou, Pierre, 15 Les Bocages Bruns,
F-95000 Cergy (FR)**

(74) Mandataire: **Moncheny, Michel, c/o Cabinet
Lavoix 2 Place d'Estienne d'Orves, F-75441 Paris
Cedex 09 (FR)**

EP 0 181 240 B1

## EP 0 181 240 B1

**Description**

La presente invention a pour objet un motoréducteur électrique, destiné à l'actionnement d'accessoires divers dans les véhicules automobiles, tels que des glaces, toits ouvrants, etc.

Ce motoréducteur est du type comportant un induit muni d'un arbre rotatif de sortie et un réducteur pourvu d'un arbre supportant une vis en prise avec une roue d'entraînement de l'accessoire, une liaison d'entraînement étant prévue entre les deux arbres.

On connait divers types de motoréducteurs utilisés pour de telles applications :

1. Dans une première réalisation, le motoréducteur à un réducteur indépendant, l'accouplement entre l'arbre de sortie de l'induit et l'arbre du réducteur pouvant être un simple clavetage dans le cas d'un alignement parfait, un joint de cardan ou de Oldham, ou une pièce en matière plastique, avec ou sans jeu.

Ce motoréducteur nécessite quatre paliers, à raison de deux aux extrémités de chaque arbre, présente un encombrement important et un coût de fabrication élevé.

2. Dans une seconde réalisation connue, l'arbre d'induit et l'arbre de vis du réducteur constituent un arbre monobloc supportant l'armature d'induit et la vis, qui est emmanchée dur ou clavetée sur l'arbre. Ce type de motoréducteur nécessite une vis dont le diamètre est suffisant pour réserver une épaisseur de matière raisonnble sous son filetage, ce qui accroît l'encombrement du réducteur.

3. Suivant une troisième réalisation, l'arbre et la vis sont venus de matière, la vis étant générée dans l'arbre :

- dans le cas où l'on veut obtenir une vis de petit diamètre, généralement inférieur ou égal à 8 mm, celle-ci est usinée dans l'arbre qui a donc au moins le diamètre de la vis, deux ou trois paliers selon le cas étant prévus. Dans le cas où l'on n'utilise que deux paliers, l'un deux est disposé à l'extrémité de la vis tournée vers l'induit, et ce palier est très chargé par la composante radiale de la réaction de la roue du réducteur, ce qui diminue le rendement de l'appareil. Si pour réduire cet inconvénient, on met en oeuvre un troisième palier supportant l'extrémité opposée de la vis, on constate qu'il est extrêmement difficile d'aligner correctement ce palier avec les deux autres. Le palier est donc monté avec un léger jeu pour limiter la flexion de la vis dont le diamètre à fond de filet est faible, de sorte qu'en pratique, le second palier supportant l'extrémité de la vis la plus proche de l'induit, est tout aussi sollicité que dans le cas ou l'on n'utilise que deux paliers, ce qui diminue le rendement du motoréducteur;

- dans le cas d'une vis de gros diamètre usinée dans la matière de l'arbre, la mise en oeuvre de deux ou trois paliers de support conduit à un diamètre d'arbre encore plus élevé, et à une diminution corrélative du rendement encore plus importante, du fait que les forces de frottement sont proportionnelles au diamètre de l'arbre. On peut alors envisager de réduire le diamètre de l'arbre en enlevant de l'arbre initial la quantité de matière convenable par usinage, mais cette méthode entraîne une perte de matière importante et est donc extrêmement onéreuse.

Un autre inconvénient de ce type de réalisation consiste dans les difficultés de fabrication de l'induit : le guidage de l'arbre est difficile pendant l'emmanchement des tôles de l'armature, d'où flambage possible de l'arbre pendant cette opération. Il devient aussi très difficile d'implanter le collecteur entre l'induit et la vis. En effet, si le collecteur est déjà monté sur l'arbre entre la vis et l'emplacement prévu pour l'armature d'induit, il rend le guidage de l'arbre encore plus difficile et de plus l'outillage d'emmanchement des tôles devient délicat.

- on peut également générer une vis, de gros diamètre dans la matière de l'arbre, par déformation à froid après emmanchement de l'arbre dans les tôles de l'armature. Cependant, la rectitude de l'arbre est difficile à obtenir et de plus, il faut prévoir un poste supplémentaire délicat de travail (roulage plus redressage) qui doit être automatisé dans une ligne automatique de production. En outre, on est généralement conduit à implanter le collecteur de l'autre côté de l'induit par rapport à la vis, afin d'éviter d'asperger le collecteur par le fluide utilisé au poste de roulage et de redressage de la vis.

Il convient encore de noter que ces procédés nécessitent, d'une manière générale, la protection de la vis tout au long du processus de fabrication de l'induit. De plus, la vis est gênante si elle est plus grosse que l'arbre. Finalement, les arbres obtenus sont très longs, ce qui entraîne des flèches et des déséquilibres importants, donc des vibrations et des bruits gênants, ces problèmes n'étant en pratique résolus de manière satisfaisante, dans le cas de l'utilisation des paliers tels qu'indiqué ci-dessus, qu'avec des arbres de gros diamètre;

- enfin, il est connu de réaliser l'arbre et la vis monobloc en soudant la vis en bout d'arbre, après bobinage de l'induit, par friction par rotation par exemple. Cependant, cette solution entraîne la mise en oeuvre de moyens lourds, donc onéreux (poste de soudure). Ce procédé conduit en outre à la fabrication d'arbres longs dont la rectitude est difficile à assurer, ce qui entraîne des déséquilibres et balourds importants, générateurs de vibrations et de bruits. On est alors amené à augmenter le diamètre de l'arbre, afin de réduire la flexion, ce qui entraîne des pertes par frottement plus élevées dans les paliers, et accroît le coût de fabrication du dispositif. De tels dispositifs connus sont décrits dans les documents US-A-4 227 107 et DE-A-1 513 750.

L'invention qui est définie dans la revendication 1 a pour but de remédier à tous ces inconvénients en proposant un motoréducteur dans lequel la liaison d'entraînement entre l'arbre d'induit et l'arbre portant la vis est réalisée de façon à réduire les déséquilibres et balourds générateurs de vibrations et de bruit gênants, et ce sans mettre en oeuvre des moyens trop onéreux.

Le motoréducteur visé par l'invention est du type comportant un accouplement articulé entre les deux arbres disposé bout à bout.

Suivant l'invention, l'accouplement entre les arbres comprend une pièce mâle logée dans des parties femelles conjuguées de cette pièce mâle, formées dans les extrémités en regard des deux arbres, ainsi qu'un

2

seul coussinet dans lequel sont introduites lesdites extrémités et qui assure le support et l'alignement axial des arbres.

Le raccourcissement ainsi obtenu pour l'arbre d'induit et l'arbre de la vis réduit par conséquent la flèche génératrice de balourds et de déséquilibres, tandis que l'arbre de sortie de l'induit est exempté de la réaction radiale générée par la roue du réducteur et encaissée par le deuxième arbre supportant la vis, ce qui constitue un avantage important par rapport aux réalisations connues. Les diamètres des deux arbres et de leurs portées peuvent être réduits et par conséquent les pertes par frottement et le poids de matière. De plus, le diamètre de la vis est indépendant de l'arbre d'induit.

Suivant un mode de réalisation de l'invention, la pièce mâle est une clavette cannelée longitudinalement et dont les cannelures viennent s'imbriquer dans des dentures complémentaires ménagées axialement dans des formes agencées dans les extrémités des arbres et constituant les parties femelles précitées.

D'autres particularités et avantages de l'invention apparaitront au cours de la description qui va suivre, faite en référence aux dessins annexés qui en illustrent plusieurs formes de réalisation :

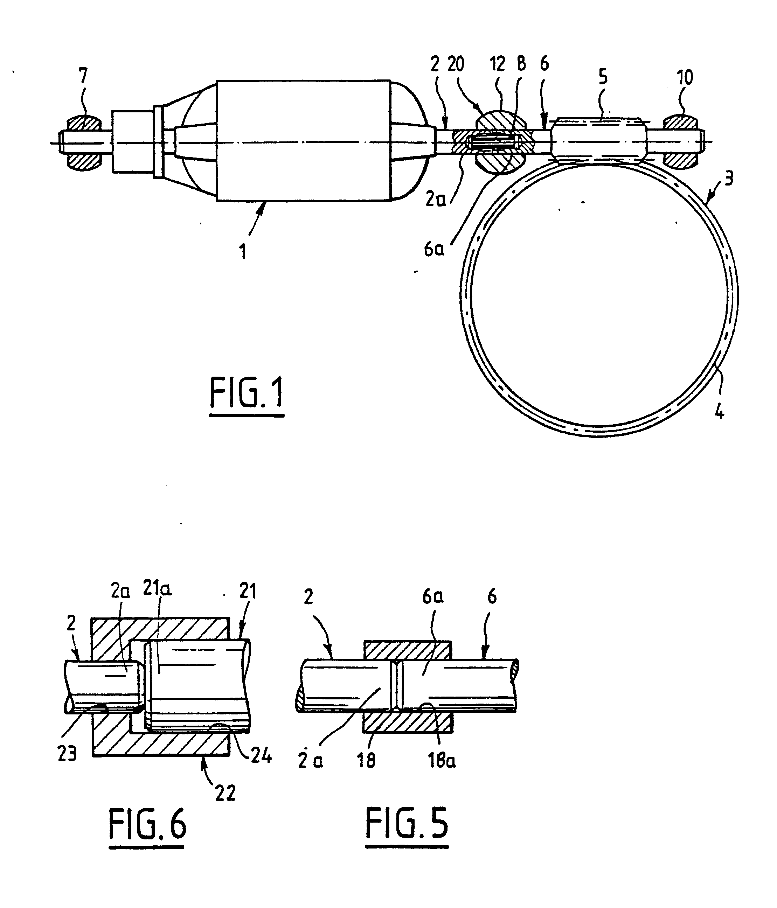

- la Figure 1 est une vue mi-coupe, mi-élévation longitudinale simplifiée d'un motoréducteur électrique selon une première forme de réalisation de l'invention;
- la Figure 2 est une vue partielle à échelle agrandie en coupe axiale de l'accouplement entre les deux arbres visible à la Figure 1;
- la Figure 3 est une vue en élévation en bout d'un des arbres de l'accouplement de la Figure 2;
- la Figure 4 est une vue analogue à la Figure 3 d'une variante de réalisation des logements de la pièce mâle;
- les Figures 5 et 6 sont des vues en élévation longitudinale et coupe partielle de deux autres variantes de l'accouplement prévu par l'invention.

Le motoréducteur électrique illustré aux dessins est destiné à l'actionnement d'accessoires de véhicules automobiles tels que des glaces, toits ouvrants, essuie-vitres et plus généralement moteur et réducteur à vis sans fin et roue tangente.

Ce motoréducteur comprend un induit 1 muni d'un arbre rotatif 2 de sortie, et un réducteur 3 constitué d'une roue 4 et d'une vis 5 solidaire d'un arbre de support 6, deux paliers ou coussinets 7, 10 étant prévus aux extrémités opposées 2a, 6a des arbres 2 et 6 pour supporter ces derniers. La roue 4 est reliée à l'accessoire à actionner par des moyens connus en soi et non représentés.

Les extrémités par contact bout à bout 2a, 6a des arbres 2, 6 sont rendues solidaires en rotation par un accouplement articulé 20 qui fait plus particulièrement l'objet de l'invention.

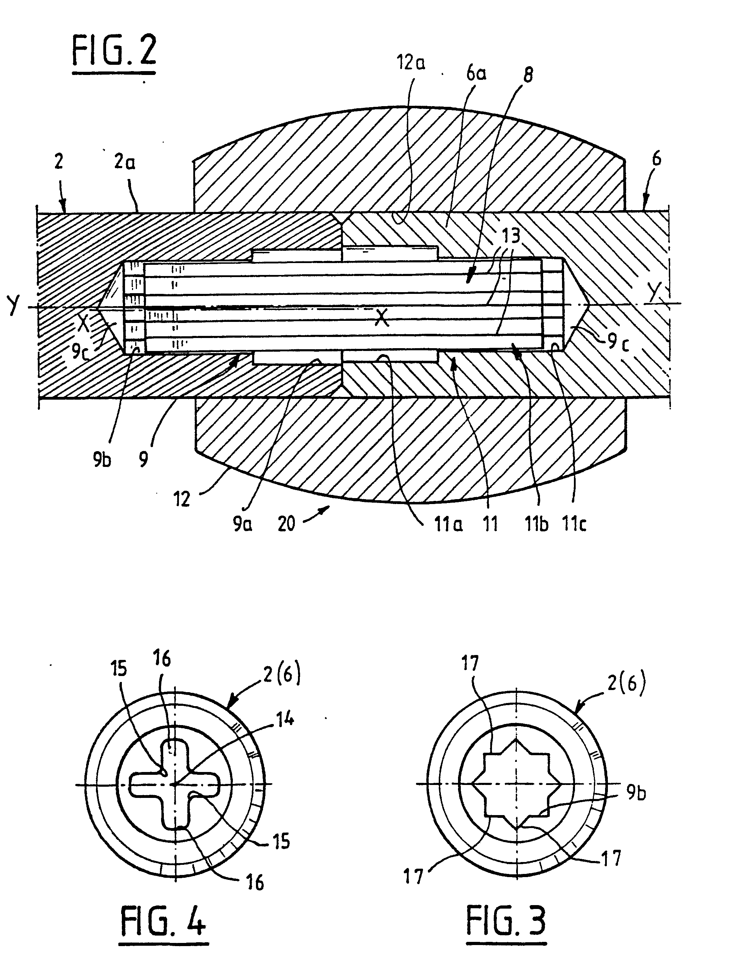

L'accouplement 20 comprend une pièce mâle 8 logée dans des parties femelles 9, 11 (Figure 2) conjuguées de cette pièce mâle 8, formées dans les extrémités en regard 2a, 6a des arbres 2, 6, ainsi qu'un seul coussinet 12 dans lequel sont introduites lesdites extrémités bout à bout 2a, 6a, et qui assure le support et l'alignement axial des arbres 2, 6. La pièce mâle 8 est, dans l'exemple décrit, une clavette ou goupille cannelée longitudinalement et dont les cannelures 13 viennent s'imbriquer dans des dentures complémentaires ménagées axialement dans les parties femelles 9, 11. Chaque partie ou forme femelle 9, 11 comprend, en partant de la face d'extrémité de l'arbre 2, 6, un chambrage cylindrique lisse (9a, 11a) dont la section est sensiblement supérieure à celle de la clavette 8, et en ajustement libre avec celle-ci dans des tolérances normales. Cette différence de section entre la pièce 8 et les chambrages (9a, 11a) est grossièrement exagérée sur la Figure 2 pour faciliter la compréhension des effets techniques obtenus par cet accouplement. Ce chambrage cylindrique (9a, 11a) est suivi d'une forme femelle (9b, 11b) de diamètre sensiblement inférieur à celui du chambrage (9a, 11a) et dont la paroi présente une denture conjuguée avec les cannelures 13 afin de permettre la transmission par celle-ci à l'arbre 6 du couple de l'arbre 2 d'induit. Ainsi, la section de la forme femelle 9b, 11b est en étoile à huit branches 17 délimitant autant de nervures et de rainures conjuguées avec les cannelures 13. Enfin, la forme femelle rainurée 9b, 11b est prolongée par un fond conique 9c, 11c, ces logements successifs ayant un même axe X-X qui est confondu aux tolérances près (Figure 2) avec l'axe Y-Y commun aux arbres 2 et 6.

Les sections des formes dentées 9b, 11b et de la clavette 8 sont déterminées de façon que l'interface entre les surfaces mâles et femelles effectivement en appui mutuel, compte tenu d'un défaut d'alignement possible entre les arbres 2, 6, ait une section maximale tout en permettant un désalignement ou une articulation suffisante des deux arbres 2, 6 l'un par rapport à l'autre. La clavette 8 s'ajuste alors librement dans ses logements 9, 11 grâce aux chambrages 9a, 11a dont la longueur est prévue suffisante pour permettre cet ajustement.

En variante, on voit à la Figure 4, une forme ou logement 14 dont la section est cruciforme et présente donc quatre nervures 15 séparées par des intervalles angulaires de 90° et délimitant entre elles des rainures 16, cette section venant s'emboiter avec une section cruciforme conjuguée de la clavette de l'accouplement.

Bien entendu les deux sections des formes femelles illustrées aux Figures 3 et 4 ne sont données qu'à titre d'exemple, des sections différentes pouvant être mises en oeuvre. Cependant, les sections cruciforme et en étoile sont préférées, en raison du fait qu'elles assurent le maximum d'appui mutuel entre les surfaces mâles et femelles compte tenu du désalignement entre la forme femelle et la clavette d'accouplement.

Le coussinet ou palier unique de support des extrémités 2a, 6a des arbres 2 et 6 peut être sphérique comme le coussinet 12 ou formé d'un bague cylindrique 18 (Figure 5).

Dans la variante de la Figure 6, l'arbre 21 de vis a un diamètre supérieur à celui de l'arbre 2, et le coussinet 22, dont la surface externe est cylindrique mais peut être sphérique, est percé de deux alésages concentriques 23, 24 dont les diamètres correspondent à ceux des extrémités 2a, 21a des arbres 2, 21.

3

Dans chaque cas, l'extrémité 6a, 21a de l'arbre 6, 21 est introduite dans le coussinet 12, 18, 22 sur la plus grande partie de la longueur axiale de ce dernier: la répartition de la longueur du coussinet entre les deux arbres est faite en fonction de la charge qu'exerce chaque arbre sur le coussinet. De plus, l'arbre 6, 21 de la vis, le plus chargé doit aussi pénétrer dans le coussinet sur plus de la moitié de sa longueur pour éviter qu'il ne pivote sur lui-même sous l'effet de la réaction de la vis.

En plus des avantages précédemment mentionnés, l'accouplement conforme à l'invention présente les suivants :

- on crée une ligne d'arbres 2, 6 présentant grâce à l'accouplement articulé 20, un noeud tolérant un léger déport angulaire des deux arbres. En effet, un tel déport angulaire est autorisé par la section des chambrages cylindriques 9a, supérieure à la section de la clavette 8, et par la longueur suffisante de ces chambrages 9a, par exemple un tiers ou la moitié de la longueur totale des logements 9, 11;

- la vis 5 a un diamètre indépendant de celui de l'arbre d'induit 2, qui de son côté est considérablement raccourci par rapport aux arbres monoblocs des réalisations antérieures précitées, ce qui réduit la flèche et les déséquilibres générateurs de vibrations;

- chaque arbre 2 et 6 est soutenu par deux paliers, à savoir respectivement 7, 12 et 12, 10, sans par conséquent apparition d'un porte-à-faux entre les deux arbres, la réaction radiale de la roue 4 sur la vis 5 étant en outre encaissée uniquement par l'arbre 6 et par le palier 12 (18), et non par l'arbre 2. Ce résultat est facilité par le fait que le palier 12 ou 18 est en contact sur la plus grande partie de sa longueur avec la partie terminale 6a de l'arbre 6, comme on le voit aux Figures 2 et 5;

- le palier-support 12 (18) présente un alésage unique 12a, 18a, recevant les extrémités 2a, 6a qui sont au même diamètre, ce qui garantit la concentricité des arbres 2, 6, conjointement avec le fait que ces derniers sont soutenus à cet endroit par un palier unique;

- un léger désalignement des trois paliers 7, 12, 10 est tolérable dans la limite des jeux autorisés par les ajustements normaux entre les pièces de jonction. Par ailleurs, le fait que les deux extrémités 2a, 6a des arbres 2, 6 soient en contact, assure la retransmission à l'extrémité de l'induit 1 de la composante axiale de l'effort exercé par la roue 4 sur la vis 5, et permet ainsi l'usage de butées axiales classiques sous forme de pastilles en polyamide par exemple. On peut d'ailleurs avantageusement, suivant une variante d'exécution de l'invention, interposer entre les extrémités 2a et 6a une pièce en matière plastique, coaxiale à la clavette 8, par exemple en polyamide, transmettant l'effort axial de l'arbre 6 à l'arbre 2. Cet amortisseur a une dureté inférieure à celle des arbres, empêche un matage éventuel de leurs extrémités, et garantit ainsi la longévité du dispositif en dépit de chocs répétés au cours d'une longue durée de fonctionnement;

- enfin, il convient de noter que le désalignement du palier 7 de l'induit, opposé à la vis 5, ne modifie pas l'entr'-axe roue 4 -vis 5 qui n'est défini que par la position des deux paliers 12, 10 de la vis 5, ces deux paliers étant portés par la même pièce 6.

**Revendications**

1. Motoréducteur électrique, destiné à l'actionnement d'accessoires de véhicules automobiles tels que des glaces comportant un induit (1) muni d'un arbre rotatif (2) de sortie et un réducteùr (3) pourvu d'un arbre (6) supportant une vis (5) en prise avec une roue (4) d'entraînement de l'accessoire, ainsi qu'un accouplement (20) articulé entre les deux arbres (2, 6) disposés bout à bout, caractérisé en ce que l'accouplement (20) entre les arbres comprend une pièce mâle (8) logée dans des parties femelles (9, 11) conjuguées de cette pièce mâle (8), formées dans les extrémités (2a, 6a) en regard des deux arbres (2, 6), ainsi qu'un seul coussinet (12, 18) dans lequel sont introduites lesdites extrémités (2a, 6a) et qui assure le support et l'alignement axial des arbres (2, 6) lesquels sont en contact par leurs extrémités (2a, 6a) soit directement, soit avec interposition d'un élément amortisseur, de manière à transmettre à l'arbre (2) de l'induit (1) la composante axiale de l'effort exercé par la roue (4) sur la vis (5).

2. Motoréducteur selon la revendication 1, caractérisé en ce que la pièce mâle est une clavette (8) cannelée longitudinalement et dont les cannelures (13) viennent s'imbriquer dans des dentures complémentaires (17) ménagées axialement dans des formes (9b, 11b) agencées dans les extrémités (2a, 6a) des arbres et constituant les parties femelles précitées,

3. Motoréducteur selon la revendication 2, caractérisé en ce que chaque logement est constitué en partant de l'extrémité de l'arbre, d'un chambrage cylindrique lisse (9a, 11a) dont la section est sensiblement supérieure à celle de la clavette (8) et en ajustement libre avec celle-ci dans des tolérances normales, et d'une forme (9b, 11b) dont la paroi présente une denture conjuguée avec les cannelures (13) de la clavette (8) afin de transmettre le couple de l'arbre d'induit (2) à l'arbre (6) de la vis (5).

4. Motoréducteur selon la revendication 3, caractérisé en ce que les sections des formes cylindriques dentées (9b, 11b) et de la clavette (8) sont déterminées de facon que l'interface entre les surfaces mâles et femelles effectivement en appui mutuel, compte tenu d'un défaut d'alignement possible entre les arbres (2, 6) ait une section maximale tout en permettant un désalignement ou une articulation suffisante des deux arbres (2, 6) l'un par rapport à l'autre.

5. Motoréducteur selon la revendication 4, caractérise en ce que les sections de la clavette (8) et des formes femelles dentées (9b, 11b) conjuguées sont soit cruciformes (14, 15), soit en étoile (17).

4

6. Mooréducteur selon l'une des revendications 1 à 5, caractérise en ce que le coussinet est sphérique (12) ou bien constitué d'une bague cylindrique (18), et l'extrémité (6a ) de l'arbre (6) de la vis (5) est introduite dans le coussinet (12, 18) sur la plus grande partie de la longueur axiale de ce dernier.

**Patentansprüche**

1. Elektrischer Getriebemotor zur Betätigung von Kraftfahrzeugteilen wie der Scheiben, mit einem Läufer (1), welcher mit einer Abtriebswelle (2) versehen ist, und einem Untersetzungsgetriebe (3), welches mit einer Welle (6) versehen ist, die eine mit einem Antriebsrad (4) für das Teil in Eingriff stehende Schnecke (5) trägt, sowie einer Gelenkkupplung (20) zwischen den beiden endweise angeordneten Wellen (2, 6), dadurch gekennzeichnet, daß die Kupplung (20) zwischen den beiden Wellen ein männliches Teil (8), welches in zu diesem männlichen Teil (8) konjugierten weiblichen Teilen (9, 11), die in den einander gegenüberstehenden Enden (2a, 6a) der beiden Wellen (2, 6) ausgebildet sind, aufgenommen ist, sowie ein einziges Wellenlager (12, 18), in welches die Enden (2a, 6a) eingeführt sind und welches die Lagerung und axiale Ausrichtung der Wellen (2, 6) gewährleistet, welche über ihre Enden (2a, 6a) entweder direkt oder mit Zwischenlage eines Pufferelements in Berührung stehen, derart, daß auf die Welle (2) des Läufers (1) die Axialkomponente der durch das Rad (4) auf die Schnecke (5) ausgeübten Kraft übertragen wird.

2. Getriebemotor nach Anspruch 1, dadurch gekennzeichnet, daß das männliche Teil ein in Längsrichtung kannelierter Keil (8) ist, dessen Kanäle (13) in Verzahnung mit komplementären Zahnungen (17) gelangen, die axial in Formen (9b, 11b) ausgespart sind, welche in den Enden (2a, 6a) der Wellen eingerichtet sind und die vorgenannten weiblichen Teile bilden.

3. Getriebemotor nach Anspruch 2, dadurch gekennzeichnet, daß jede Aufnahme ausgehend vom Ende der Welle durch eine zylindrische glatte Einsenkung (9a, 11a), deren Querschnitt deutlich größer als derjenige des Keils (8) und in freier Einstellung mit letzterem in normalen Toleranzen ist, und eine Form (9b, 11b) gebildet ist, deren Wand zur Übertragung des Drehmoments der Läuferwelle (2) auf die Welle (6) der Schnecke (5) eine zu den Kanälen (13) des Keils (8) konjugierte Verzahnung aufweist.

4. Getriebemotor nach Anspruch 3, dadurch gekennzeichnet, daß die Querschnitte der zylindrischen gezahnten Formen (9b, 11b) und des Keils (8) so bestimmt sind, daß die in wechselseitiger tatsächlicher Anlage befindliche Grenzfläche zwischen den männlichen und weiblichen Oberflächen unter Berücksichtigung eines möglichen Ausrichtungsfehlers zwischen den Wellen (2, 6) einen maximalen Querschnitt hat, womit eine ausreichende wechselseitige Falschausrichtung bzw. Winkelung zwischen den beiden Wellen (2, 6) zugelassen ist.

5. Getriebemotor nach Anspruch 4, dadurch gekennzeichnet, daß die Querschnitte des Keils (8) und der konjugierten weiblichen gezahnten Formen (9b, 11b) entweder kreuzförmig (14, 15) oder sternförmig (17) sind.

6. Getriebemotor nach einem der Ansprüche 1 bis 5, dadurch gekennzeichnet, daß das Wellenlager sphärisch (12) oder auch durch einen zylindrischen Ring (18) gebildet ist, und das Ende (6a) der Welle (6) der Schnecke (5) in das Wellenlager (12, 18) über den größeren Teil der axialen Länge des letzteren eingeführt ist.

**Claims**

1. Electric motor-speed reducer unit for driving accessories of motor vehicles, such as window glasses, comprising an armature (1) provided with a rotary output shaft (2) and a speed reducer (3) provided with a shaft (6) carrying a worm (5) engaged with a worm wheel (4) for driving the accessory, and an articulated coupling (20) between the two shafts (2, 6) which are disposed in end-to-end relation, characterized in that the coupling (20) between the two shafts comprises a male member (8) disposed in female parts (9, 11) which are, disposed in confronting end portions (2a, 6a) of the two shafts (2, 6) and are conjugate with the male member (8), and a single bushing (12, 18) in which said end portions (2a, 6a) are inserted and which ensures the support and the axial alignment of the two shafts (2, 6) which are in contact by their end portions (2a, 6a) either directly or with interposition of a shock-absorbing member, so as to transmit to the shaft (2) of the armature (1) the axial component of the force exerted by the worm wheel (4) on the worm (5).

2. Motor-speed reducer unit according to claim 1, characterized in that the male member is a key (8) which is longitudinally splined and whose splines (13) are imbricated in complementary teeth (17) formed axially in forms (9b, 11b) arranged in the end portions (2a, 6a) of the shafts and constituting said female parts.

3. Motor-speed reducer unit according to claim 2, characterized in that each shaft end portion comprises, starting at the end of the shaft, a smooth cylindrical recess (9a, 11a) whose section is substantially larger than the section of the key (8) and freely mounted on the latter with normal tolerances, and a form (9b, 11b) whose wall has teeth conjugate with the splines (13) of the key (8) so as to transmit the torque of the armature shaft (2) to the shaft of the worm (5).

4. Motor-speed reducer unit according to claim 3, characterized in that the sections of the toothed cylindrical, forms (9b, 11b) and of the key (8) are so determined that the interface between the male and female surfaces which are in fact in mutual engagement, taking into account a possible disalignment between the shafts (2, 6), has a maximum section while allowing a disalignment or a sufficient articulation between the two shafts (2, 6).

5. Motor-speed reducer unit according to claim 4, characterized in that the sections of the key (8) and of the conjugate toothed female forms (9b, 11b) are in the shape of either a cross (14, 15) or a star (17).

6. Motor-speed reducer unit according to any one of the claims 1 to 5, characterized in that the bushing is spherical (12) or formed by a cylindrical ring (18) and the end portion (6a) of the shaft (6) of the worm (5) is inserted in the bushing (12, 18) in the major part of the axial length of the bushing.

FIG.1

FIG.6

FIG.5

# FIG. 2

# FIG. 4

# FIG. 3